# EUROPÄISCHE PATENTANMELDUNG

(11) **EP 0 803 414 A1**
(43) Veröffentlichungstag der Anmeldung: **29.10.1997**
(21) Anmeldenummer: 97106562.8
(22) Anmeldetag: 21.04.1997
(51) Int. Cl.: B60S 1/08

(54) **Vorrichtung zum blasenfreien Fixieren von zu klebenden Komponenten**

(30) Priorität: 23.04.1996 DE 19616073
(71) Anmelder: ITT MANUFACTURING ENTERPRISES, INC., Wilmington, Delaware 19801 (US)
(72) Erfinder: Kiersten, Peter, 71720 Oberstenfeld (DE); Schuler, Thomas, 75446 Wiernsheim (DE); Nahr, Kalrheinsz, 71691 Freiburg (DE); Sautter, Hans, 74366 Kirchheim (DE)
(74) Vertreter: Portwich, Peter

(57) **Zusammenfassung**

Es wird eine Vorrichtung zum blasenfreien Fixieren von zu klebenden Komponenten dargestellt. Diese besteht aus einem Grundkörper (2), an dessen Unterseite eine Dichtlippe (1) aus Gummi angebracht ist. Diese bilden einen Saugraum (13), der mittels einer Pumpe (16) evakuiert werden kann. Sobald der Saugraum in einem bestimmten Maße (13) evakuiert ist, bewegt sich der Kolben (3), an dessen Unterseite z.B. ein Regensensor (4) angebracht ist, gegen die Kraft der Feder (7) auf eine Windschutzscheibe (9) zu, bis eine Klebefolie (5), die an der Unterseite des Regensensors (4) befestigt ist, auf der Windschutzscheibe aufliegt.

Die Druckverhältnisse werden solange beibehalten, bis die Haftung der Klebung so groß ist, daß der Sensor beim Zurückziehen des Kolbens auf der Scheibe haften bleibt. Beim Belüften des Saugraumes bewegt sich der Kolben (3) nach oben, wobei sich die Haltevorrichtung (14) löst und der Sensor (4) an der Scheibe (9) verbleibt.

Da das Aufsetzen des Klebstoffs (5) in einem nahezu luftfreien Raum erfolgt, entstehen keine Blasen im Klebstoff, die möglicherweise die Funktionalität des Sensors, die auf optischen Prinzipien beruht, behindert.

## Beschreibung

Die Erfindung bezieht sich auf eine Vorrichtung zum blasenfreien Fixieren von zu klebenden Komponenten.

Sehr häufig werden Komponenten bzw. Bauteile auf glatten Flächen mit Hilfe eines Klebers fixiert. Der Kleber wird dabei in flüssiger bzw pastöser Form oder als selbstklebende Folie (z.B. selbstklebende Siliconfolie) aufgebracht.

Aus EP 660 377 A1 ist eine Einrichtung zum Befestigen eines Wavers bekannt, welcher mit Hilfe eines Klebers auf einer Grundplatte festgeklebt wird. Der Waver wird dabei mit Hilfe eines Unterdrucks an einem ortsfesten Träger gehalten, wobei der ortsfeste Träger wiederum in einen Saugraum reicht, der durch die Grundplatte abgeschlossen wird. Durch Erhöhung des Unterdrucks im Saugraum wird der ebenfalls durch Unterdruck am Träger gehaltene Waver von dem Träger gelöst und fällt dann mit seiner Klebstoffschicht auf die Grundplatte. Nachteilig ist hier, daß der Waver durch Schwerkraft auf die Grundplatte fällt, so daß sich die endgültige Lage des Wavers nicht genau bestimmen läßt. Außerdem gibt die Schwerkraft die Bewegungsrichtung des Wavers gegenüber der Grundplatte vor, so daß die Befestigungseinrichtung nur in bestimmten Arbeitslagen eingesetzt werden kann. Schließlich kann es erwünscht sein, daß der Waver mit einer bestimmten Kraft zügig in den Klebstoff eingebracht wird, was mit der bekannten Einrichtung nicht möglich ist.

Um eine ausreichende Haltbarkeit und Festigkeit der Verbindung zu gewährleisten, ist es notwendig, die Klebeschicht so aufzubringen, daß in ihr keine Blasen entstehen, die Verbindung also blasenfrei ist. Diese Forderung muß auch erfüllt werden, um Bedingungen, die sich auf die optische Wirksamkeit der Schicht beziehen, realisieren zu können. So sind z. B. sogenannte Regensensoren bekannt, die auf optische Prinzipien aufbauen und mit mit deren Hilfe festgestellt werden soll, ob sich z.B. auf der Windschutzscheibe Regentropfen befinden, so daß nach Auswertung der Sensorsignale ein automatischer Wischvorgang eingeleitet werden kann.

Eine Art dieser Sensoren arbeitet mit Strahlungen im Infrarot- bzw. Subinfrarotbereich, die durch die Scheibe geschickt werden. Sender und Empfänger der Strahlung befinden sich dabei an der Innenseite der Windschutzscheibe. Der Empfänger registriert Veränderungen in der Strahlungsintensität, die durch veränderte Brechungsverhältnisse, die durch Flüssigkeitstropfen an der Außenseite der Scheibe bewirkt werden, hervorgerufen werden.

Ein solcher Sensor wird auf die Innenseite der Scheibe geklebt. Der Sensorstrahl durchdringt die Klebeschicht und die Scheibe. Damit keine optischen Störungen des Strahls auftreten, die die Wirksamkeit des Sensors in Frage stellen könnten, muß eine hohe Homogenität der Klebefläche garantiert werden. Um dies zu erreichen, muß die Klebefläche blasenfrei sein. Wenn der Sensor in Umgebungsluft, d,h. in Atmosphäre, auf die zu klebende Fläche (Scheibe) gesetzt wird, kann eine derartige Blasenfreiheit nicht garantiert werden.

Die Erfindung beruht daher auf der Aufgabe, eine Vorrichtung zu schaffen, mit der die zu klebende Komponente blasenfrei auf eine glatte Grundfläche aufgesetzt werden kann. Dazu wird eine Vorrichtung vorgeschlagen, die aus einem Grundkörper besteht, der dichtend auf die zu beklebende Grundfläche aufsetzbar ist, so daß sich ein Saugraum bildet. Ein Träger, der dichtend im Grundkörper gleitet, ist mit einer Halterung versehen, die die zu klebende Komponente aufnimmt. Außerdem ist eine Unterdruckquelle vorgesehen, die an den Saugraum anschließbar ist, wobei der Träger so gestaltet ist, daß er bei Erzeugung eines Unterdrucks im Saugraum auf die Grundfläche zu bewegt wird.

Im einfachsten Fall kann der Träger als Kolben ausgebildet werden, der dichtend im Grundkörper gleitet, wobei eine Stirnseite des Kolbens an den Saugraum und die andere Stirnseite des Kolbens an Atmosphäre angrenzt. Zur Bildung des Saugraumes wird eine Dichtlippe aus Gummi oder einem entsprechenden Kunststoff an den Grundkörper angesetzten, die konzentrisch zum Kolben verläuft.

Damit der Kolben erst bei einem bestimmten Unterdruck verfahren wird, ist eine Feder vorgesehen, die zwischen Grundkörper und Kolben abgestützt ist und deren Vorspannung den Einsatzdruck bestimmt. Das Aufsetzen des Klebstoffs (5) erfolgt auf diese Weise in einem nahezu luftfreien Raum: Es entstehen daher keine Blasen im Klebstoff, die möglicherweise die Funktionalität des Sensors, die auf optischen Prinzipien beruht, behindert.

Um eine eindeutige Definition der Anpreßkraft zu erhalten, kann ein Unterdruckbegrenzungsventil vorgesehen werden, mit dem der Unterdruck in dem Saugraum begrenzt wird.

Der Kolben ist an seiner Unterseite, die dem Saugraum zugewandt ist, mit einer Klemmvorrichtung versehen, die das zu klebende Teil aufnimmt. Dabei werden die Klemmkräfte so gewählt, daß sie kleiner sind als die mittels der Klebeverbindung erzeugten Haltekräfte.

Die vorliegende Erfindung stellt sicher, daß die zu klebende Komponente (beispielsweise Sensor) mit einer steuerbaren Anpreßkraft gegen den Grundkörper gepreßt wird. Wird der Unterdruck in dem Saugraum sehr schnell abgesenkt, so wird der Druck auf den Kleber vergleichsweise schnell erhöht. Durch die Einstellung des Trägerweges bis zum Aufsetzen der Klebmasse auf die zu beklebende Fläche läßt sich in gewissem Umfange auch die Kraft einstellen, mit der die zu klebende Komponente auf die zu beklebende Fläche aufsetzt. Bei der vorliegenden Erfindung ist es nun so, daß zu Beginn des Unterdruckes der Träger sich in Bewegung setzt und dabei die zu klebende Komponente sich der glatten Fläche nähert. Vielfach ist es erwünscht, daß die Bewegung des Trägers und dabei der mögliche Beginn des Klebvorgangs erst dann eintreten sollen, wenn in dem Saugraum ein hinreichender Unterdruck besteht, um auch sicherzugehen, daß sich keine Blasen bilden können. Zwar hängt der Unterdruck beim Aufsetzen der zu klebenden Komponente nicht nur von der Federkraft, sondern auch von dem durch den Träger zurücklegbaren Weg ab. Es ist aber relativ schwierig, die beiden Parameter derart aufeinander abzustimmen, daß immer die gleichen Druck- und Kraftverhältnisse beim Ankleben vorliegen. Weiterhin ist es bei vielen neueren (z.B. Zweikomponenten-Klebern) Klebern notwendig, daß das aufzuklebende Bauteil sofort mit einer hinreichend hohen Kraft auf das gegenüberliegende Teil aufgepreßt wird, wobei diese Kraft von Anfang an vorhanden sein muß. Eine erst später auf diesen Betrag anwachsende Kraft führt nicht zu dem gewünschten Ergebnis. Will man hier Abhilfe schaffen, so empfiehlt sich in Weiterbildung der Erfindung die Merkmalskombination nach Anspruch 7. Diese Weiterbildung besteht im Prinzip darin, erst eine auf den Träger einwirkende hinreichend große Kraft aufzubauen, während der Träger noch festgehalten wird. Erst wenn die Kraft den gewünschten Betrag hat, wird die Bewegung des Trägers freigegeben und dieser preßt sofort mit der gewünschten Kraft die zu klebende Komponente auf die zu beklebende Fläche (Scheibe) auf. Die Auslösung des Trägers wird man erst dann veranlassen, wenn der Unterdruck im Saugraum genügend groß ist, so daß sich keine Blasen in dem Klebstoff bilden können.

Eine besonders einfache Lösung hierzu ergibt sich durch die Merkmalskombination nach Anspruch 8. Dabei macht man von der Tatsache Gebrauch, daß die Haftreibung zwischen zwei Gegenständen in der Regel größer ist als die Gleitreibung. Sieht man also eine geeignete Haftreibung vor, so wird nach dem Überschreiten dieser Reibkraft der Träger sich schlagartig in Bewegung setzen. Die Haftreibung wird man dann so groß wählen, daß sie erst überwunden wird, wenn der Unterdruck in dem Saugraum ausreichend groß ist. Da die Größe der Haftreibung stark von dem mechanischen Aufbau zwischen Träger und Grundkörper abhängt und von Vorrichtung zu Vorrichtung schwanken kann, empfiehlt sich in Weiterbildung der Erfindung die Merkmalskombination nach Anspruch 9. Dabei wird im Prinzip das Festhalten des Trägers durch einen Vorsprung erreicht, welcher entweder selbsttätig beim Vorliegen einer gewissen auf den Träger wirkenden Kraft ausweicht (Rastverbindung) oder das Haltemittel beim Erreichen der gewünschten Trägerkraft mechanisch entsperrt, indem beispielsweise eine Sperrklinke zurückgezogen wird. Eine besonders einfache Lösung hierzu ergibt sich durch Anwendung der Merkmalskombination nach Anspruch 10.

Vielfach ist es erwünscht, in diesem Falle die Auslösung der Trägerbewegung ausschließlich von dem Unterdruck im Saugraum abhängig zu machen. Hierzu lassen sich vorteilhaft die Maßnahmen nach Anspruch 11 anwenden. Dabei ist ein gegen eine Feder einwirkender Hilfskolben vorgesehen, dessen Lage von dem auf ihn einwirkenden Unterdruck im Saugraum abhängt. Die Lage des Hilfskolbens ist wiederum maßgeblich für die Stellung der Sperrklinke, so daß auf diese Weise die Sperrklinke bei einem in entsprechender Höhe vorliegenden Unterdruck im Saugraum ausgelöst wird. Eine andere vorteilhafte Möglichkeit kann darin bestehen, bei gleichartigem Aufbau der Vorrichtung die Anpreßkraft der zu klebenden Komponente von dem Unterdruck im Saugraum weitgehend unabhängig zu machen. Hierbei kann entsprechend der Merkmalskombination nach Anspruch 12 ein Kraftspeicher vorgesehen sein, welcher die gewünschte Anpreßkraft zur Verfügung stellt. Der Träger setzt sich aber erst dann in Bewegung, wenn eine Sperrklinke freigegeben wird. Die Sperrklinke wird aber erst dann freigegeben, wenn in dem Saugraum ein geeigneter Unterdruck herrscht. Der Träger kann dabei derart ausgestaltet werden, daß die Anpreßkraft alleine durch die vorgespannte Feder des Kraftspeichers oder aber zusätzlich noch durch den Unterdruck im Saugraum bestimmt wird.

Ausführungsbeispiele der Erfindung werden nachfolgend anhand der Zeichnung erläutert. Dabei zeigt
- Fig. 1: eine erfindungsgemäße Vorrichtung ohne gesonderte Haltemittel
- Fig. 2: eine Vorrichtung entsprechend Figur 1, bei der der Träger selbsttätig beim Aufbau eines bestimmten Unterdrucks in dem Saugraum freigegeben wird und
- Fig. 3: eine Vorrichtung, bei der die auf den Träger ausgeübte Kraft unabhängig von dem Unterdruck im Saugraum ist.

Mit 9 ist eine Windschutzscheibe bezeichnet, an deren Innenseite ein Sensor 4 aufgeklebt werden soll. Dazu befindet sich an der Unterseite des Regensensors eine selbstklebende Siliconfolie 5. Damit die Klebeverbindung blasenfrei ist, ist eine Vorrichtung vorgesehen, die als Ganzes mit 12 bezeichnet ist. Diese besteht aus einem langgestreckten Grundkörper 2, in dessen Achse ein Kolben 3 dichtend geführt ist. An der Unterseite des Grundkörpers 2 ist konzentrisch zu seiner Achse eine Dichtlippe 1 aus Gummi angeformt.

Wird der Grundkörper 2 auf die Scheibe 9 aufgesetzt, so schließt die Dichtlippe 1 einen Saugraum 13 ein. Der Kolben 3 ist nun so ausgebildet, daß seine Unterstirnseite in den Saugraum 13 angrenzt und eine Klemmvorrichtung aufweist, in der der Regensensor 4 aufgenommen wird. Im vorliegenden Fall besteht die Klemmvorrichtung aus einem Absatz 14 in dem mit einer Sacklochbohrung 15 versehenen Kolben 3.

Die andere Stirnseite des Kolbens 3 ragt durch die Außenseite des Grundkörpers 2 nach außen und wird daher vom Atmosphärendruck belastet.Im Grundkörper 2 ist eine Bohrung 6 vorgesehen, die in den Saugraum 13 mündet und an die eine Unterdruckpumpe 16 angeschlossen ist. Die Pumpe kann z. B. durch eine einfache Venturi-Düse an einem Druckluftnetz realisiert werden. Außerdem kann, was hier nicht dargestellt ist, ein Unterdruckbegrenzer vorgesehen werden, mit dessen Hilfe der Unterdruck im Saugraum 13 begrenzt werden kann.

Eine Schraubenfeder 7 ist koaxial zur Achse des Kolbens angeordnet und stützt sich einerseits an der Oberkante des Grundkörpers 2 und andererseits an einem Vorsprung am Kolben 3 ab.

Die Anschlußkabel 17 des Sensors 4 werden von der Sacklochbohrung 15 aufgenommen. Dazu ist eine Ausnehmung 18 in der Stufe 14 vorgesehen. Damit wird gleichzeitig erreicht, daß der Sensor 4 lagerichtig am Kolben 3 angesetzt wird. Als äußere Lageorientierung dient eine Markierung 8.

Die Vorrichtung arbeitet wie folgt: Die Feder 7 hält zunächst den Kolben 3 an einen Anschlag am Grundkörper 2. Sodann wird die mit dem Sensor bestückte Vorrichtung auf die zu beklebende Scheibe aufgesetzt, und zwar derart, daß die Dichtlippe 1 den sich dabei bildenden Saugraum 13 hermetisch gegenüber der Außenluft abschließt. Diese Situation ist in der Figur dargestellt. Durch Inbetriebnahme der Pumpe 16 wird im Saugraum 13 ein Unterdruck erzeugt. Sobald ein Unterdruck erzielt wird, der in der Lage ist, die Vorspannkraft der Feder 7 zu überwinden, bewegt sich der Kolben gemaß der Darstellung nach unten in den Saugraum hinein, bis die Folie 5 zur Anlage an die Scheibe 9 gelangt. Die Anpreßkraft wird dabei bestimmt vom zu erzielenden Unterdruck, der mittels eines Unterdruckbegrenzers eingestellt werden kann. Da das Aufsetzen des Klebers und der Positionier- und Klebevorgang selbst im nahezu luftfreien Raum des Saugraumes erfolgt, können sich keine Blasen bilden.

Der Unterdruck im Saugraum 13 wird für die Dauer der Trokkenzeit beibehalten oder zumindest solange, bis der Kolben 3 unter Zurücklassung des Sensors zurückgezogen werden kann. Zum Lösen der Vorrichtung wird der Saugraum 13 belüftet. Dadurch bewegt sich der Kolben 3 durch die Kraft der Feder 7 nach oben. Dabei löst sich der Sensor aus dem Absatz 14, so daß er an der Windschutzscheibe 9 kleben bleibt.

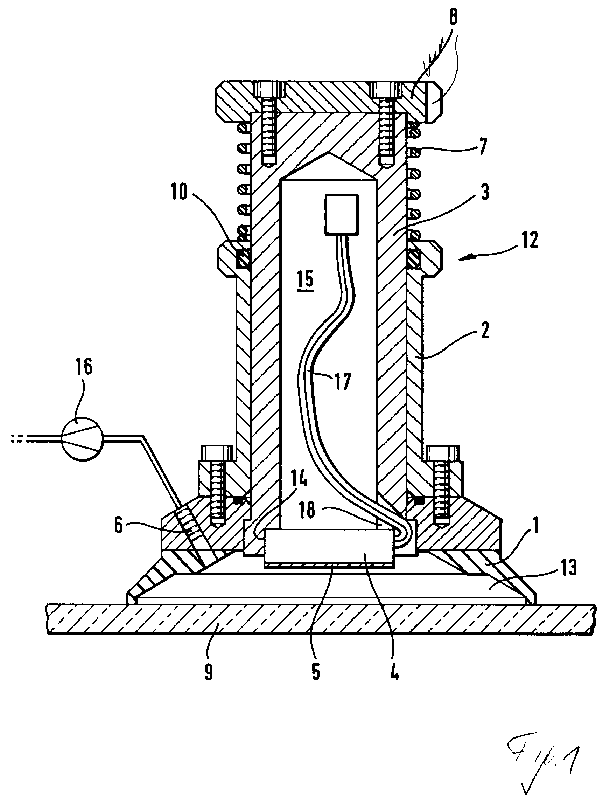

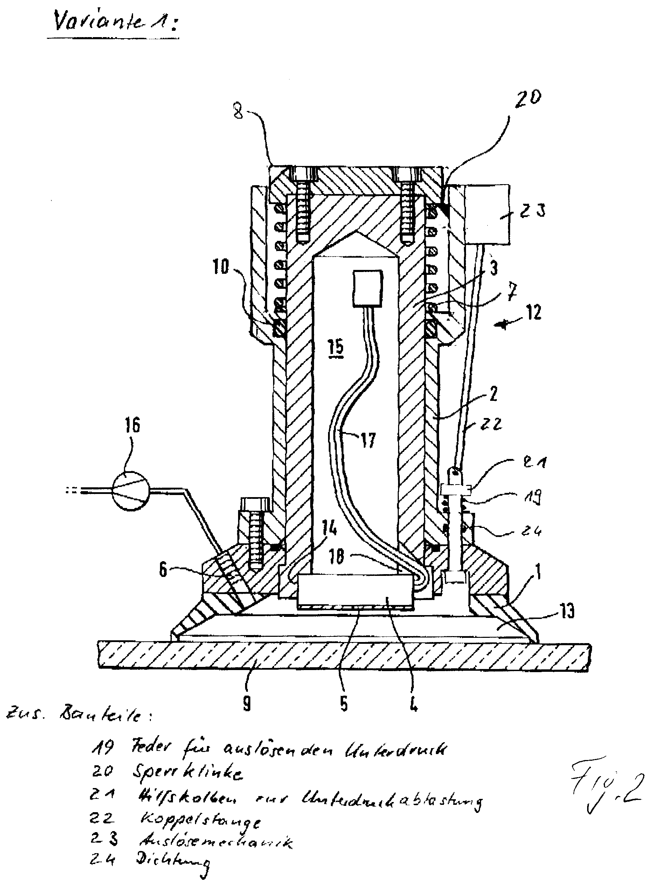

In Fig. 2 wird eine Ausführungsform der erfindungsgemäßen Vorrichtung beschrieben, welche mit der Ausführungsform nach Fig. 1 weitgehend übereinstimmt. Es werden daher aus Gründen größerer Übersichtlichkeit und um Wiederholungen zu vermeiden nur diejenigen Teile der Vorrichtung nach Fig. 2 beschrieben, welche von Fig. 1 abweichen.

In Fig. 2 ragt in den Saugraum ein dichtend in dem Grundkörper 2 geführter Hilfskolben 21. Dieser Kolben wird mit einer Vorspannfeder 19 in Fig. 2 nach oben gerichtet vorgespannt, wobei die Feder 19 entgegen der durch die Saugwirkung des Unterdrucks in dem Saugraum 13 gerichteten Kraft wirkt. In dem gezeigten Zustand ist der Hilfskolben in seiner oberen Position, in der er über eine Auslösemechanik 23 eine Sperrklinke 20 in ihrem Sperrzustand hält, indem sie eine Abwärtsbewegung des Trägers 3 in Richtung der zu beklebenden Fläche 9 verhindert. Über die Saugpumpe 16 kann nunmehr der Unterdruck in dem Saugraum 13 auf geeignete Höhe gebracht werden, ohne daß sich der Träger 3 bewegt.

Wächst der Unterdruck an, so wird durch den Außendruck der Hilfskolben 21 entgegen der Wirkung der Feder 19 in den Saugraum 13 verschoben. Bei einer Stellung des Hilskolbens, die dem gewünschten Unterdruck entspricht, wird über die Auslösemechanik 23 die Sperrklinke 20 zurückgezogen, so daß der auf den Träger 3 wirkende Unterdruck diesen entgegen der Rückholfeder 7 in den Saugraum zieht, wodurch die zu klebende Komponente 4 auf die zu beklebende Fläche aufgepreßt wird. Wurde die zu klebende Komponente fest auf der Scheibe befestigt, so kann der Unterdruck in dem Saugraum 13 abgelassen werden, wodurch sich der Grundkörper 2 in Verbindung mit dem Träger 3 von der zu beklebenden Fläche 9 abheben läßt. Die Rückholfeder 7 holt zuvor den Träger in seine Ausgangslage zurück. Da die Klebkraft größer als die Klemmkraft ist, die das zu klebende Bauteil 4 im Träger 3 hält, fährt der Träger3 ohne das zu klebende Bauteil 4 zurück. Die Vorspannfeder 19 zieht den Hilfskolben 21 aus dem Saugraum 13 entgegen einem Anschlag. Bei dieser Bewegung wird auch die Sperrklinke 20 durch die Auslösemechanik 23 erneut ausgefahren. Es ist nicht notwendig, daß der Unterdruck unbedingt durch eine Saugpumpe 16 in dem Saugraum 13 hergestellt wird. Hierzu können auch Unterdruckspeicher dienen, die mit entsprechenden Absperrventilen versehen sind.

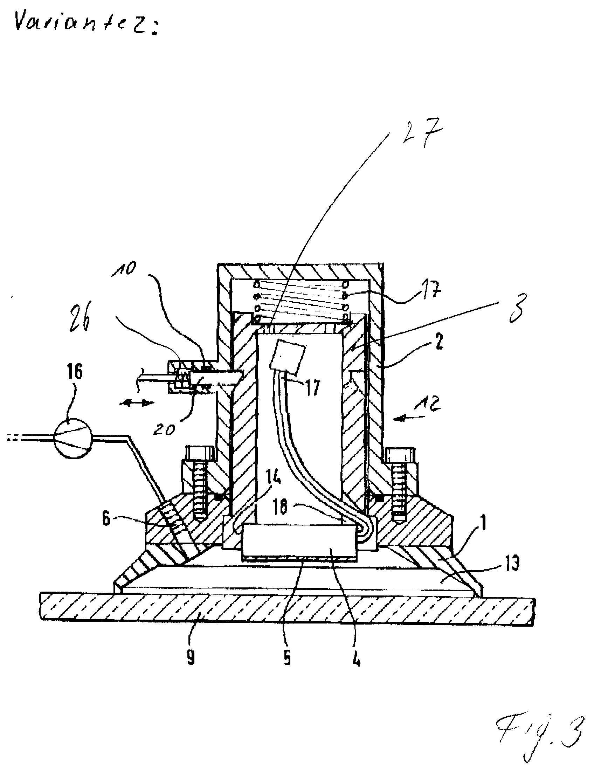

Fig. 3 zeigt ein weiteres Ausführungsbeispiel der Erfindung, wobei ein Kraftspeicher mit Hilfe einer Speicherfeder 17 vorgesehen ist, welche eine Vorspannung auf den Träger 3 ausübt. Der Träger 3 ist mittels einer Sperrklinke 20 verriegelt, welche mittels einer Klinkenfeder 26 in Sperrstellung gehalten wird. Hierdurch kann die Vorspannfeder 17 den Träger 3 nicht gegen die zu beklebende Fläche 9 bewegen. Es läßt sich nunmehr in dem Saugraum 13 beispielsweise über die Saugpumpe 16 ein Unterdruck aufbauen, wie er zum Verhindern einer Blasenbildung des Klebers notwendig ist. Ist dieser Unterdruck erreicht, wird durch geeignete, nicht näher dargestellte Mittel die Sperrklinke 20 entgegen der Wirkung der Klinkenfeder 26 zurückgezogen, so daß der Träger 3 mit der durch die Speicherfeder 17 vorgegebenen Kraft nach unten bewegt wird. In Fig. 3 sind Ausgleichsöffnungen 27 zu erkennen, durch welche der in dem Saugraum 13 herrschende Unterdruck auch in den die Speicherfeder 17 umgebenden Raum im Grundkörper gelangt. Der Unterdruck in dem Saugraum 13 kann somit nicht zu der den Träger 3 bewegenden Kraft beitragen. Saugdruck und Anpreßkraft sind somit getrennt einstellbar. Es ist aber auch möglich, die Ausgleichsöffnungen 27 zu verschließen, so daß in diesem Falle auch der Unterdruck in dem Saugraum 13 zur Bewegungskraft des Trägers 3 beiträgt.

Die Sperrklinke 20 kann in Abhängigkeit von dem Meßergebnis des Unterdrucks im Saugraum 13 mechanisch zurückgezogen werden. Man kann die Sperrklinke aber auch als durch die Dichtung 10 abgedichteten Kolben ausgestalten, welcher über einen Unterdruck, wie er beispielsweise in dem Saugraum 13 herrscht, über eine angedeutete Verbindungsleitung zurückgezogen wird. Der Träger 3 wird mechanisch zurückgeschoben oder bei verschlossenen Ausgleichsöffnungen durch Druckumkehr im Saugraum zurückgeschoben werden.

## Patentansprüche

1. Vorrichtung zum blasenfreien Fixieren von zu klebenden Komponenten (4) auf einer glatten Fläche, bestehend aus
- einem Grundkörper (2), der dichtend auf die zu beklebende Fläche (9) aufsetzbar ist, wobei sich ein Saugraum (13) bildet
- aus einem Träger (3) für die zu klebende Komponente, der dichtend im Grundkörper gleitet, und
- aus einer Saugeinrichtung (16), die an den Saugraum (13) anschließt, vorzugsweise Saugpumpe, Wasserstrahlpumpe oder Ventildüse.

2. Vorrichtung nach Anspruch 1, dadurch **gekennzeichnet**, daß der Träger aus einem Kolben (3) besteht, der im Grundkörper (2) gleitend und dichtend gelagert ist, wobei die eine Stirnseite des Kolbens (3) an den Saugraum (13) und die andere Stirnseite des Kolbens (3) an die Atmosphäre anschließt.

3. Vorrichtung nach einem der vorhergehenden Ansprüche, dadurch **gekennzeichnet**, daß an der Unterseite des Grundkörpers (2) eine vorzugsweise konzentrisch zur Achse des Grundkörpers verlaufende Dichtlippe (1) angebracht ist.

4. Vorrichtung nach einem der vorhergehenden Ansprüche, dadurch **gekennzeichnet**, daß durch eine voreingestellt auf den Kolben (3) wirkende Kraft sichergestellt ist, daß der Kolben (3) erst bei einem bestimmten Unterdruck im Saugraum (13) bewegt wird.

5. Vorrichtung nach Anspruch 4, dadurch **gekennzeichnet**, daß zwischen dem Kolben (3) und dem Grundkörper (2) eine Feder (7) angeordnet ist, durch welche vorzugsweise die vom Träger auf die zu klebende Komponente ausgeübte Anpreßkraft in Abhängigkeit vom Saugdruck festlegbar ist.

6. Vorrichtung nach einem der vorhergehenden Ansprüche, dadurch **gekennzeichnet**, daß die Anpreßkraft mittels eine Einstellmittes kontrollierbar ist.

7. Vorrichtung nach einem der vorhergehenden Ansprüche, dadurch **gekennzeichnet**, daß sie mit einem Haltemittel (20) versehen ist, welches erst dann ausgelöst wird und den Träger (3) für eine gegen die zu beklebende Fläche (9) gerichtete Bewegung freigibt, wenn die auf dem Träger (3) gegenüber den Grundkörpern (2) in Bewegungsrichtung gerichtete Kraft einen vorgegebenen Betrag überschreitet und/oder wenn der Unterdruck im Saugraum (13) einen vorgegebenen Wert erreicht hat.

8. Vorrichtung nach Anspruch 7, dadurch **gekennzeichnet**, daß das Haltemittel durch die Haftreibung zwischen Träger (3) und Grundkörper (2) gegeben ist.

9. Vorrichtung nach Anspruch 7 oder 8, dadurch **gekennzeichnet**, daß das Haltemittel durch eine Sperrklinke (20) und/oder durch eine Rastverbindung zwischen Träger (3) und Grundkörper (2) gebildet ist.

10. Vorrichtung nach Anspruch 9, dadurch **gekennzeichnet**, daß die Rastverbindung durch vorgespannte, bei einer vorgegebenen Kraft in Bewegungsrichtung des Trägers auslösende Rastmittel oder die Sperrklinke (20) durch einen gegenüber dem Träger bewegbaren Vorsprung gebildet ist, welcher bei Vorliegen der gewünschten Druckverhältnisse von seiner Verriegelungsstellung in seine Entriegelungsstellung gebracht wird.

11. Vorrichtung nach einem der Ansprüche 7 bis 10, dadurch **gekennzeichnet**, daß ein Hilfskolben vorgesehen ist, welcher in Abhängigkeit von dem Unterdruck im Saugraum (13) das Haltemittel (20) steuert.

12. Vorrichtung nach einem der Ansprüche 7 bis 11, dadurch **gekennzeichnet**, daß ein Kraftspeicher (17) vorzugsweise Federspeicher vorgesehen ist, der in Bewegungsrichtung den Träger (3) vorspannt und bei Auslösung des Haltemittels (20, Fig. 3) den Träger (3) gegebenenfalls zusätzlich zum Unterdruck im Saugraum (13) antreibt.
